# EUROPEAN PATENT APPLICATION

(11) **EP 3 247 052 A1**
(43) Date of publication of application: **22.11.2017**
(21) Application number: 17171973.5
(22) Date of filing: 19.05.2017
(51) Int. Cl.: H04B 7/0413, H04B 7/08, H04W 88/08, H04B 1/30

(54) **METHOD AND APPARATUS FOR DATA REDUCTION IN A COMMUNICATION SYSTEM BETWEEN REMOTE RADIO HEADS AND BASEBAND UNITS**

(30) Priority: 19.05.2016 US 201662338526 P
(71) Applicant: Hon Hai Precision Industry Co., Ltd., New Taipei City (TW)
(72) Inventor: VAN CAI, Khiem, Placentia, CA California CA 92870 (US); HEGER, Wilhelm, Newbury Park, CA California CA 91320 (US)
(74) Representative: Cordina, Kevin John

(57) **Abstract**

A method of data reduction implemented in a communication system, the method comprising steps of generating, by at least one radio frequency (RF) down converting module, a plurality of first baseband signals in response to a plurality of signals received by at least one antenna, capturing, by at least one obtaining module, a plurality of second baseband signals, in response to a signal time duration, from each of the first baseband signals, generating, by at least one first converting module, a plurality of thi rd baseband signals in response to the second baseband signals, transmitting, by a first transmitting module, a first combined signal including the third baseband signals to at least one baseband signal unit via a communication system, retrieving, by a retrieving module, the third baseband signal from the received first combined signal, generating, by at least one second converting module, a plurality of fourth baseband signals, and generating, by a second transmitting module, a second combined signal including the fourth baseband signals.

## Description

### CROSS REFERENCE

This application claims the benefit of U.S. Provisional Application Serial No. 62/338526, filed on May 19, 2016, and entitled 'METHOD AND APPARATUS FOR DATA REDUCTION OF A COMMUNICATION SYSTEM, which is incorporated herein by reference in its entirety.

### TECHNICAL FIELD

The disclosure generally relates to the field of communication method and particularly to a wireless communication method with data reduction mechanism implemented to a communication system.

### BACKGROUND

A goal of the next generation wireless communication, e.g. 5G, is to provide a giant leap in the number of user services and to have a rapid response. Some features for these communication systems include an increase in the numbers of connectivity devices by a factor of 1000, provi di ng peak data rates of up to 20 G b/s to users, supporti ng 1 millisecond latency, and a 90% power reduction.

Many other communication technologies are also used to complement or support the 5G mobile communication systems. One challenge is the communication traffic load between numerous RRHs and the BBU. For example, by applying the 4G concept, the communication between RRH and BBU is conducted via common public radio interface (CPRI) protocol, with in-phase and quadrature data (IQ data) transmitted between BBU and RRH for both uplink and downlink pathways. Moreover, the data rate between BBU and RRH is proportional to the signal bandwidth and the number of antennas. For a RRH with large signal bandwidth and large number of antennas (up to 256 antennas in 5G communication system), the fronthaul to transport the signal between RRH and BBU would be extremely high and costly.

### BRIEF DESCRIPTION OF THE DRAWINGS

Aspects of the exemplary disclosure are best understood from the following detailed description when read with the accompanying figures. It is noted that, in accordance with the standard practice in the industry, various features are not drawn to scale. In fact, the dimensions of the various features may be arbitrarily increased or reduced for clarity of discussion.
FIG. 1 shows a block diagram of a communication system including a data reduction mechanism of the present disclosure;
FIG. 2 shows a schematic view of a data reduction of FIG.1 of the present disclosure;
FIG. 3 shows a flow chart of a method of data reduction of FIG.1 of the present disclosure;
FIG. 4 is a schematic block diagram of one embodi ment of the present disclosure; and
FIG. 5 is a schematic view of data reduction mechanism of one embodiment of the present disclosure.

### DETAILED DESCRIPTION

The following disclosure provides many different embodiments, or examples, for implementing different features of the provided subject matter. Specific examples of components and arrangements are described below to simplify the exemplary disclosure. These are, of course, merely examples and are not intended to be limiting. For example, the formation of the first feature over or on a second feature in the description that follows may include embodiments in which the first and second features are in direct contact, and may also include embodiments in which additional features may be formed between the first and second features, such that the first and second features may not be in direct contact. In addition, the exemplary disclosure may repeat reference numerals and/or letters in the various examples. Such repetition is for the purpose of simplicity and clarity and does not in itself dictate a relationship between the various embodiments and/or configurations discussed.

For consistency of purpose and ease of understanding, like features are identified (although, in some instances, not shown) by numerals in the exemplary FIG.s. However, the features in different embodiments may differ in other respects, and thus shall not be narrowly confined to what is shown in the FIG.s.

The term 'coupled is defined as connected, whether directly or indirectly through intervening components, and is not necessarily limited to physi cal connections. The connection can be such that the objects are permanently connected or releasably connected. The term 'comprising, when utilized, means 'including, but not necessarily limited to_; it specifically indicates open-ended inclusion or membership in the so-described combination, group, series and the like.

In assessing the reasons for high CPRI data rate, the current CPRI protocol includes a high level of overhead. The present disclosure provides a method to reduce data amount on the uplink transmission (from RRH to BBU).

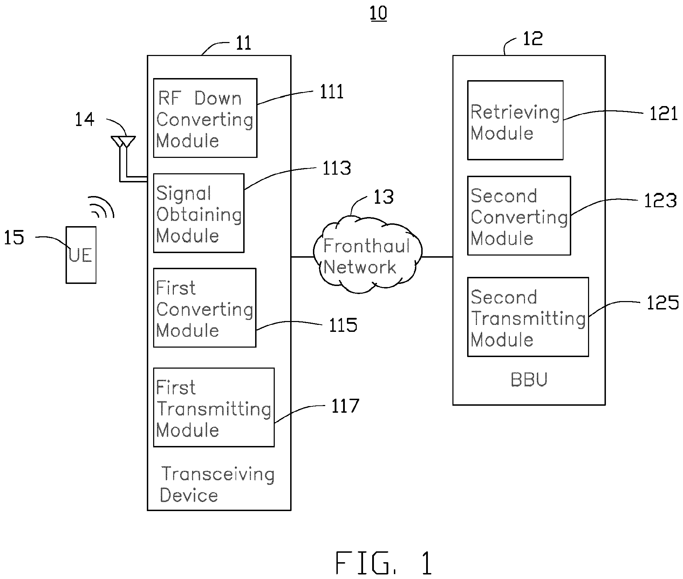

FIG. 1 shows a block diagram of a communication system including a data reduction mechanism of the present disclosure. As shown in FIG. 1, the communication system 10 includes at least one transceiving device 11 and at least one baseband unit (BBU) 12. The transceiving device 11 communicates with the baseband unit 12 via a communication network 13. The transceiving device 11 is configured to receive wireless signals, by at least one antenna 14, from at least one wireless device 15. In this embodiment, the wireless device 15 includes a user equipment (UE) such as a mobile phone. In this embodiment, the transceiving device 11 includes a remote radio head (RRH). The communication network 13 includes a fronthaul network.

In this embodiment, the transceiving device 11 further includes at least one radio frequency (RF) down converting module 111, at least one signal obtaining module 113 coupled to the radio frequency down converti ng module 111, at least one first converti ng module 115 coupled to the signal obtaining module 113 and a first transmitting module 117 coupled to the first converting module 115. In this embodiment, the radio frequency (RF) down converting module 111 is configured to generate a plurality of first baseband signals in response to the received wireless signals. The signal obtaining module 113 is configured to capture a plurality of second baseband signals, in response to a signal ti me durati on, from each of the fi rst baseband signals. The first converting module 115 is configured to generate a plurality of third baseband signals in response to the second baseband signals.

In some embodiments, the first converting module 115 includes a digital down converter. In some embodiments, the first converting module 115 includes a fast Fourier transform mechanism. The first transmitting module 117 is configured to transmit a first combined signal, including the third baseband signals, to the baseband unit 12 via the communication network 13.

Moreover, in this embodiment, the baseband unit 12 further includes a retrieving module 121, at least one second converting module 123, and a second transmitting module 125. In this embodiment, the retrieving module 121 is configured to retrieve the third baseband signal from the received first combined signal. The second converting module 123 is configured to generate a plurality of fourth baseband signals and the second transmitting module 125 is configured to generate a second combined signal including the fourth baseband signals. In this embodiment, a bandwidth of the fourth baseband signal is same as a bandwidth of the second baseband signal.

In some embodiments, the fourth baseband signals are configured for M ulti-Input M ulti-Output (MIMO) processes. In some embodiments, the fourth baseband signals are configured for beam forming signal processes.

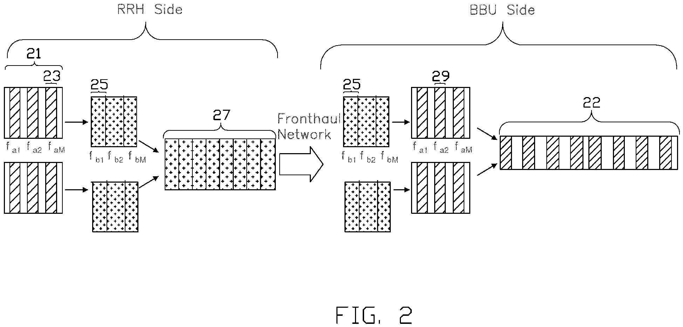

FIG. 2 shows a schematic view of a data reduction of FIG.1 of the present disclosure. As shown in FIG. 2, in this embodiment, on a remote radio head (RRH) side, a plurality of first baseband signals 21 are generated in response to a plurality of signals received by at least one antenna. A plurality of second baseband signals 23 are then captured, in response to a signal time duration (not shown), from each of the first baseband signals 21. A plurality of third baseband signals 25 are then generated in response to the second baseband signals 23, and a first combined signal 27 including the third baseband signals 25 is transmitted to a baseband unit (BBU).

In some embodiments, the second baseband signals 23 located on frequencies fₐ₁, fₐ₂,ǔ, f_{aM} are converted, by a digital down converter, to the third baseband signals 25 located on frequencies f_{b1}, f_{b2},ǔ, f_{bM} in such a way the first combined signal 27 are notoverlapped.

In some embodiments, the second baseband signals 23 located on frequencies fₐ₁, fₐ₂,ǔ, f_{aM} are converted, by a fast Fourier transform mechanism, to the third baseband signals 25 located on frequencies f_{b1}, f_{b2},ǔ, f_{bM}. Therefore, in this embodiment, a bandwidth of the third baseband signals 25 is smaller than a bandwidth of the first baseband signal 21 in such a way that the data rate is reduced.

On BBU side, the third baseband signals 25 are retrieved from the received first combined signal 27. A plurality of fourth baseband signals 29 is then generated in response to the third baseband signals 25. In this embodiment, a bandwidth of the fourth baseband signal 29 is same as a bandwidth of the second baseband signal 23. A second combined signal 22 including the fourth baseband signals 29 is then generated and, in this embodiment, transmitted for Multi-Input Multi-Output (MIMO) processes. In some embodiments, the fourth baseband signals 29 are configured for beam forming signal processes.

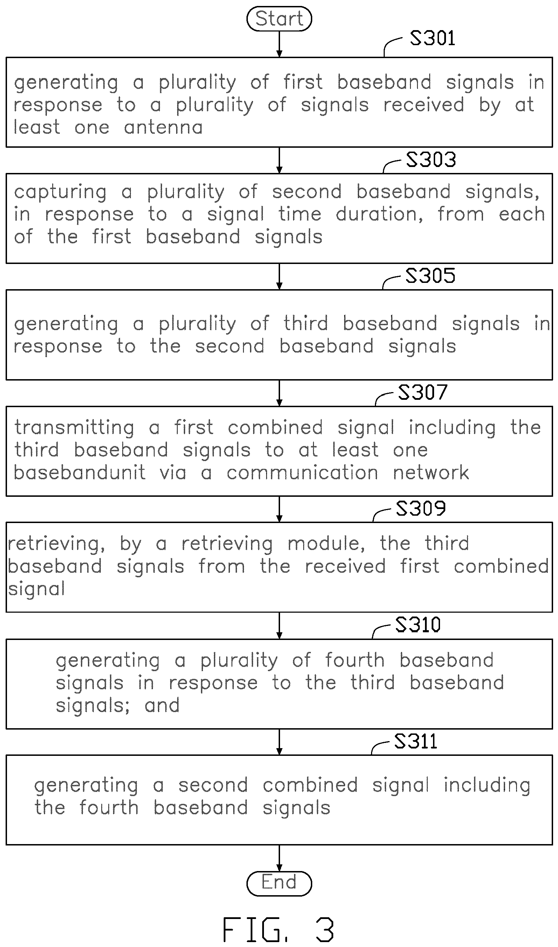

FIG. 3 shows a flow chart of a method of data reduction of FIG.1 of the present disclosure. As shown in FIG. 3, in this embodiment, in step S301, a plurality of first baseband signals are generated, by at least one radio frequency (RF) down converting module, in response to a plurality of signals received by at least one antenna. In step S303, a plurality of second baseband signals are captured by at least one obtaining module, in response to a signal time duration, from each of the first baseband signals. In step S305, a plurality of third baseband signals are generated, by at least one fi rst converti ng module, i n response to the second baseband signals. In step S307, a first combined signal including the third baseband signals is transmitted, by a first transmitting module, to at least one basebandunit via a communication network. In some embodiments, the communication network includes a fronthaul network. In step S309, the third baseband signals are retrieved, by a retrieving module, from the received first combined signal. In step S310, a plurality of fourth baseband signals are generated, by at least one second converting module, in response to the third baseband signals. In step S311, a second combined signal including the fourth baseband signals is generated. In some embodiments, a bandwidth of the fourth baseband signal is same as a bandwidth of the second baseband signal.

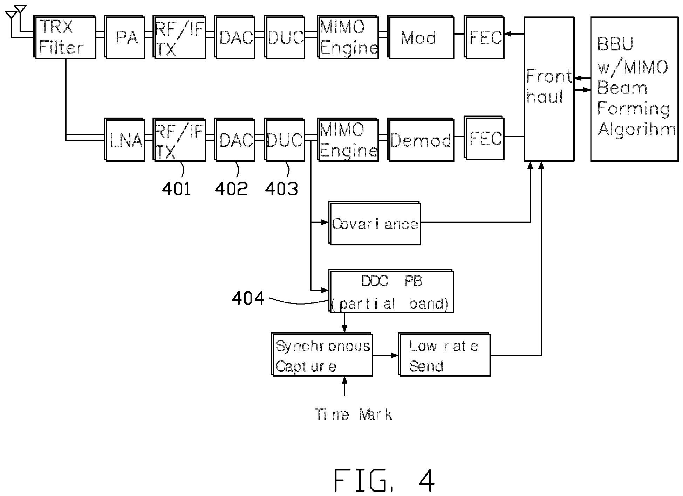

FIG. 4 is a schematic block diagram of one embodiment of the present disclosure. On an uplink (RRH to BBU) transmission, a plurality of signals processed by at least one radio frequency (RF) down converter 401 are converted to a plurality of intermediate frequency (IF) signals. The IF signals are then subsequently converted to digital samples via the analog-to-digital converter (ADC) 402, and then further down converted to a plurality of desired sub-band signals via at least one digital-to-digital converter (DDC) 403 for MIMO processing and demodulation.

Moreover, in this embodiment, the sub-band signals from DDC 403 are filtered by at least one DDC partial band filter (DDC PB filter) 404, for capturing a plurality baseband signals. The baseband signals includes a bandwidth that is smaller than a bandwidth of the sub-band signals from DDC 403. In some embodiments, the baseband signals includes a time data which is smaller than a time data of the sub-band signals from DDC 403.

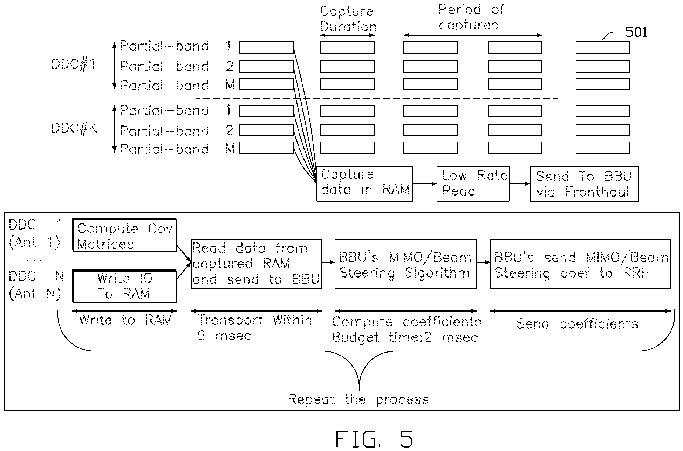

FIG. 5 is a schematic view of data reduction mechanism of one embodiment of the present disclosure. As shown in FIG. 4 and FIG. 5, the vertical direction in FIG. 5 represents the frequency axis, and the horizontal di recti on represents the ti me axis.

In this embodiment, a transmission block 501, including a bandwidth and a time duration, is for transmitting data. On the vertical direction of the transmission block 501 is the transmission bandwidth, and on the horizontal direction is the transmission duration. As shown in FIG. 5, the data amount transmitted by the transmission block 501 is captured and then processed, to render a signal with lower data rate (that is, only sufficient amount of data in the transmission blocks 501 would be transmitted to BBU) to be transmitted via a fronthaul network.

As shown in FIG. 5, DDC #1, a bandwidth is divided into M partial-band in view of frequency axis, and data is transmitted in each partial-band. In some embodiments, M=5 and each partial-band includes a bandwidth of 200 K Hz for each of the 5 transmission blocks 501. In this embodiment, the amount of data transmitted by the fronthaul network is reduced to 5 x 200KHz / 20 MHz = 5%, wherein 20 MHz is the bandwidth of the output signal of DDC 403.

In this embodiment, a capture duration Tc is captured out of a capture period Tp. Moreover, the Tp is a time period needed to be periodically updated in a MIMO system and Tc is the transmission duration of the transmission block 501. In some embodiments, the MIMO system is required to update every 8 milliseconds (which means Tp=8 msec), and the capture duration is 100 microseconds (which means Tc=100 usec). Therefore, the amount of data transmitted is reduced to 100 usec/ 8 msec = 1.25%

In some embodiments, the reduction on the data that is transmitted over the fronthaul network is 5% x 1.25% =0.0625%, which is a reduction of 1600 times. For beam-forming and MIMO applications, in some embodiments, the captured signals from different antennas are used to compute the beam-forming weights or MIMO precodes via covariance processing. Therefore, for such applications, the synchronous captured signals are required to accurately estimate the covariance matrices. As shown in FIGs 4 and 5, all partial-band signals from the output of the DDC PB filter 404 are synchronously captured in the RAM, triggered by a programmable Time Mark.

Moreover, the total size of the RAM is determined by NxKxMxL, wherein N is the number of antenna elements, K is the number of DDC 404 outputs, M is the number of partial bands per DDC, and L is number of captured samples over Tc per fractional band. The total RAM size would be a complex number.

The samples in the RAM are then read out, and sent to the BBU via the f ronthaul at a low rate, such that the capture RA M transport is done within a time interval of T seconds, which is dependent on the update rate or the B B U speed of computation. For example, if the update rate of the MIMO is required to be 8 msec, and the B B U computati on ti me is 2 msec, and the ti me to send the beam-forming coefficient data back to the RRH is 1 microsecond, then the capture RA M data needs to be sent to B B U within 5.999 msec.

By the method of data reduction in accordance with the present disclosure, the uplink f ronthaul data rate may be reduced when the BBU is not collocated with the RRH, and the BBU pool may perform the MIMO and beam forming signal processing at the centralized network. The proposed method reduces the uplink data transmission by sending the partial band and/or partial time portion of IQ data from RRH to BBU pool via fronthaul. It is a small time domain section of the IQ signal that are filtered to reduce the amount of data to be transmitted via fronthaul from the RRH to BBU. This will reduce the required data rate on the fronthaul network by orders of magnitude.

Take an example of a RRH system with 256 antennas and a bandwidth of 1 GHz, the required data rate for the fronthaul network is about 256 x 10⁹ x 2 x 16 (bit/sec) = 8192 Gb/sec, which is overwhelmingly overhead. Therefore, in this embodiment, with the partial band data reduction to 5%, and the partial time data reduction to 1.25%, the data rate for the fronthaul network dedicated to the MIMO processing in the centralized BBU Pool will be about (5% x 1.25%) x 256 x 10⁹ x 2 x16 (bit/sec) = 5.12 G b/sec.

When adding this required rate to the information data rate of the uplink fronthaul, the combined total data rate would be about 20Gb/s+5.12Gb/s =25.12 Gb/s, which is supported by the fronthaul network.

Therefore, the present disclosure discloses a method of data reduction implemented in a communication system, the method comprising steps of generating, by at least one radio frequency (RF) down converting module, a plurality of first baseband signals in response to a plurality of signals received by at least one antenna; capturing, by at least one obtaining module, a plurality of second baseband signals, in response to a signal time duration, from each of the first baseband signals; generating, by at least one first converting module, a plurality of third baseband signals in response to the second baseband signals; transmitting, by a first transmitting module, a first combined signal including the third baseband signals to at least one basebandunit via a communication network; retrieving, by a retrieving module, the third baseband signals from the received first combined signal; generating, by at least one second converting module, a plurality of fourth baseband signals in response to the third baseband signals; and generating, by a second transmitting module, a second combined signal including the fourth baseband signals.

In some embodiments, the communication network includes a fronthaul network.

In some embodiments, a bandwidth of the fourth baseband signal is same as a bandwidth of the second baseband signal.

In some embodiments, the fourth baseband signals are configured for M ulti-Input M ulti-Output (MIMO) processes.

In some embodiments, the fourth baseband signals are configured for beam forming signal processes.

In some embodiments, the first converting module includes a digital down converter.

In some embodiments, the first converting module includes a fast Fourier transform mechanism.

The present disclosure discloses a communication system including a data reduction mechanism, the communication system comprising at least onetransceiving device, configured to receive wireless signals from at least one wireless device and at least one baseband unit (BBU), coupled to the transceiving device. The transceiving device further includes at least one radio frequency (RF) down converting module configured to generate a plurality of first baseband signals in response to the received wireless signals; at least one signal obtaining module coupled to the radio frequency down converting module, wherein the signal obtaining module is configured to capture a plurality of second baseband signals, in response to a signal ti me duration, from each of the first baseband signals; at least one first converting module configured to generate a plurality of third baseband signals in response to the second baseband signals; and a fi rst transmitting module configured to transmit a first combined signal including the third baseband signals to the baseband unit via a communication network.

The baseband unit further includes a retrieving module configured to retrieve the third baseband signal from the received fi rst combined signal; at least one second converting module configured to generate a plurality of fourth baseband signals; and a second transmitting module configured to generate a second combined signal including the fourth baseband signals.

In some embodiments, the communication network including a fronthaul network.

In some embodiments, a bandwidth of the fourth baseband signal is same as a bandwidth of the second baseband signal.

In some embodiments, the fourth baseband signals is configured for M ulti-Input M ulti-Output (MIMO) processes.

In some embodiments, the fourth baseband signals is configured for beam forming signal processes.

In some embodiments, the first converting module includes a digital down converter.

In some embodiments, the first converting module includes a fast Fourier transform mechanism.

In some embodiments, thetransceiving device includes a remote radio head(RRH).

The foregoing outlines features of several exemplary embodiments so that those skilled in the art may better understand the aspects of the present disclosure. Those skilled in the art should appreciate that they may readily use the present disclosure as a basis for designing or modifyi ng other processes and structures for carryi ng out the same purposes and/or achievi ng the same advantages of the exemplary embodiments introduced herein. Those skilled in the art should also realize that such equivalent constructions do not depart from the spirit and scope of the present disclosure, and that they may make various changes, substitutions, and alterations herein without departing from the spi rit and scope of the present disclosure.

## Claims

1. A method of data reduction implemented in a communication system, the method comprising steps of:
generating, by at least one radio frequency (RF) down converting module, a plurality of first baseband signals in response to a plurality of signals received by at least one antenna;
capturing, by at least one obtaining module, a plurality of second baseband signals, in response to a signal time duration, from each of the first baseband signals;
generating, by at least one first converting module, a plurality of third baseband signals in response to the second baseband signals;
transmitting, by a first transmitting module, a first combined signal including the third baseband signals to at least one basebandunit via a communication network;
retrieving, by a retrieving module, the third baseband signals from the received first combined signal;
generating, by at least one second converting module, a plurality of fourth baseband signals in response to the third baseband signals; and
generating, by a second transmitting module, a second combined signal including the fourth baseband signals.

2. The method of claim 1, wherein the communication network includes a fronthaul network.

3. The method of claim 1, wherein a bandwidth of the fourth baseband signal is same as a bandwidth of the second baseband signal.

4. The method of claim 1, wherein the fourth baseband signals are configured for Multi-Input Multi-Output (MIMO) processes.

5. The method of claim 1, wherein the fourth baseband signals are configured for beam forming signal processes.

6. The method of claim 1, wherein the first converting module includes a digital down converter.

7. The method of claim 1, wherein the first converti ng module includes a fast Fourier transform mechanism.

8. A communication system including a data reduction mechanism, comprising:
at least one transceiving device, configured to receive wireless signals from at least one wireless device; and
at least one baseband unit (BBU), coupled to the transceiving device;
wherein the transceiving device further includes:
at least one radio frequency (RF) down converting module configured to generate a plurality of first baseband signals in response to the received wireless signals;
at least one signal obtaining module coupled to the radio frequency down converting module, wherein the signal obtaining module is configured to capture a plurality of second baseband signals, in response to a signal time duration, from each of the first baseband signals;
at least one first converting module configured to generate a plurality of third baseband signals in response to the second baseband signals; and
a first transmitting module configured to transmit a first combined signal including the third baseband signals to the baseband unit via a communication network;
and
wherein the baseband unit further includes:
a retrieving module configured to retrieve the third baseband signal from the received first combined signal;
at least one second converting module configured to generate a plurality of fourth baseband signals; and
a second transmitting module configured to generate a second combined signal including the fourth baseband signals.

9. The communication system of claim 8, wherein the communication network including a fronthaul network.

10. The communication system of claim 8, wherein a bandwidth of the fourth baseband signal is same as a bandwidth of the second baseband signal.

11. The communication system of claim 8, wherein the fourth baseband signals is configured for Multi-Input Multi-Output (MIMO) processes.

12. The communication system of claim 8, wherein the fourth baseband signals is configured for beam forming signal processes.

13. The communication system of claim 8, wherein the first converting module includes a digital down converter.

14. The communication system of claim 8, wherein the first converting module includes a fast Fourier transform mechanism.

15. The communication system of claim 8, wherein the transceiving device includes a remote radio head (RRH).
